Europäisches Patentamt

European Patent Office

Office européen des brevets

(19)

(11) Veröffentlichungsnummer : **0 075 793**
**B1**

(12) EUROPÄISCHE PATENTSCHRIFT

(45) Veröffentlichungstag der Patentschrift :
30.12.86

(51) Int. Cl.⁴ : **G 21 C 19/06**

(21) Anmeldenummer : **82108559.4**

(22) Anmeldetag : **16.09.82**

(54) Lagergestell für langgestreckte Brennelemente.

(30) Priorität : 29.09.81 DE 3138749

(43) Veröffentlichungstag der Anmeldung :
06.04.83 Patentblatt 83/14

(45) Bekanntmachung des Hinweises auf die Patenterteilung : 30.12.86 Patentblatt 86/52

(84) Benannte Vertragsstaaten :
AT CH FR LI

(56) Entgegenhaltungen :
DE-A- 2 629 938
FR-A- 2 379 883
FR-A- 2 455 339

(73) Patentinhaber : KRAFTWERK UNION AKTIENGE-
SELLSCHAFT
Wiesenstrasse 35
D-4330 Mülheim (Ruhr) (DE)

(72) Erfinder : Haase, Walter
Bergwerkstrasse 14
D-8757 Karlstein (DE)

(74) Vertreter : Mehl, Ernst, Dipl.-Ing. et al
Postfach 22 01 76
D-8000 München 22 (DE)

Jouve, 18, rue St-Denis, 75001 Paris, France

## Beschreibung

Die Erfindung betrifft ein Lagergestell für langgestreckte Brennelemente gemäß dem Anspruch. Bei einem aus der DE-A-26 29 938 bekannten Lagergestell für langgestreckte Brennelemente von Kernreaktoren sind an einer unteren Gitterplatte Aufstands- und Zentrierungsflächen zur Festlegung der Brennelemente in bestimmten Brennelementposition und an jeder Brennele-mentposition mindestens zwei rotationssymmetri-sche Zentrierbolzen vorgesehen, die einen durch die Gitterplatte greifenden Gewindezapfen zur Schraubbefestigung aufweisen. Die Brennelemente sind mit aus Absorberblech, insbesondere Borblech, bestehenden Schächten umgeben, die aufgrund ihrer Absorberwirkung ein enges Zusammenrücken der Brennelemente ermöglichen. Diese Absorberschächte werden mit Hilfe der rotationssymmetrischen Zentrierbolzen seitlich geführt, und zwar sind die Zentrierbolzen in ihrem oberhalb der Gitterplatte gelegenen Teil Zylinder mit einem oberen Konus, der eine Einlaufschräge bildet. Die Zylinderflächen ergeben die seitliche Zentrierung der Absorberschächte. Als Aufstandsflächen sind dagegen Eindrehungen in der unteren Gitterplatte vorgesehen. Solche Eindrehungen erfordern einen relativ großen Aufwand an mechanischer Bearbeitung und sollten deshalb vermieden werden.

Ein recht hoher Aufwand für die Befestigung von Führungsschächten, die die zu lagernden Brennelemente einschließen, ist auch bei dem aus der französischen Patentschrift FR-A-2 455 3-39 bekannten Lagergestell zu vermuten. Die Führungsschächte sollen zwar in seitlicher Richtung mit Zentrierbolzen geführt werden, die auch die Brennelemente tragen. Die vertikale Abstützung erfolgt jedoch mit einer horizontalen Platte, auf die der untere Rand der Führungsschächte aufgeschweißt ist, und die mit einer in die untere Gitterplatte eingeschraubten großen Hohlschraube festgeklemmt wird.

Bei dem erfindungsgemäßen Lagergestell· besitzen die Zentrierbolzen dagegen oberhalb der Gitterplatte zwei Absätze mit rechtwinkligem Querschnitt, von denen der erste Absatz mit einer horizontalen Fläche die Aufstandsfläche für ein Brennelement bildet, während seine vertikale Fläche zur seitlichen Zentrierung des Brennelements dient und von denen der zweite Absatz einen Führungsschacht abstützt, der das Brennelement umschließt.

Bei der Erfindung erhält man eine von Bearbeitungen der Gitterplatte unabhängige Abstützung der Führungsschächte, die durch eine Anpassung der kleinen und daher leicht zu bearbeitenden Zentrierbolzen einen Ausgleich von Fertigungstoleranzen ermöglicht. Vor allem entfällt die schweißtechnisch schwierige Naht zwischen dem dünnen Blech des Führungsschachtes und der dicken horizontalen Platte.

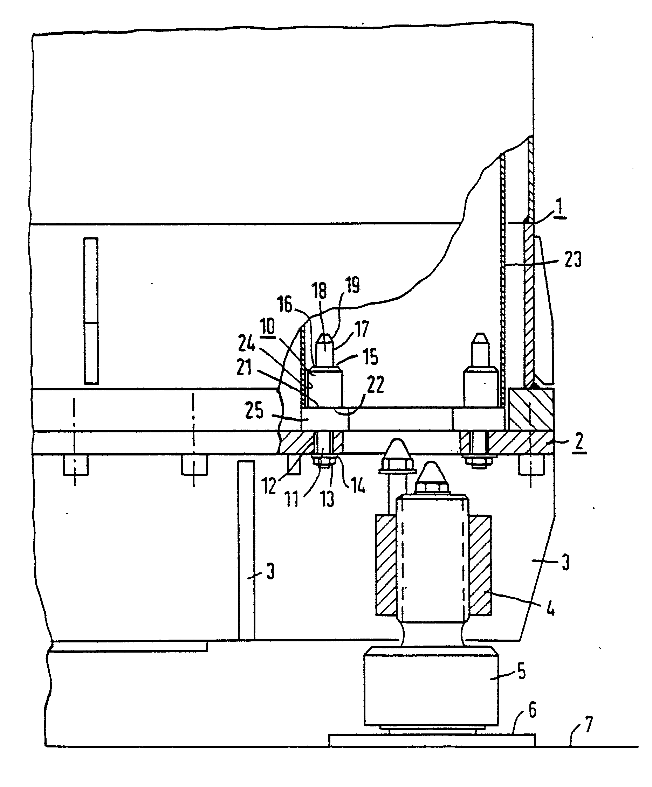

Zur näheren Erläuterung der Erfindung wird anhand der beiliegenden Figur ein Ausführungsbeispiel beschrieben. Dabei zeigt die Figur in einem Ausschnitt die untere Ecke eines Brennelement-Lagergestells mit den einer Brennelementposition zugeordneten Zentrierbolzen in einer Seitenansicht, zum Teil im Schnitt.

Das Brennelement-Lagergestell 1 umfaßt als wesentlichen Bestandteil eine untere Gitterplatte 2, die mit Hilfe von Rippen 3 versteift ist. An den Rippen 3 sitzen Gewindehülsen 4 mit eingeschraubten Füßen 5, die über Lagerkörper 6 greifen. Die Lagerkörper 6 sind an dem nicht weiter dargestellten Boden 7 eines Brennelement-Lagerbeckens befestigt.

Das Lagergestell 1 dient zur Aufnahme quadra-tischer Brennelemente von Druckwasserreakto-ren, die bei einer Kantenlänge des Querschnitts von etwa 200 mm eine Länge von 4 m oder mehr haben. Diese Brennelemente werden nach der Erfindung mit Hilfe von vier Zentrierbolzen 10 abgestützt, die in den Ecken des Brennelementquerschnitts mit der Gitterplatte 2 verbunden sind. Zu diesem Zweck greifen die als Drehkörper rotationssymmetrisch ausgebildeten Zentrierstifte mit einem Gewindezapfen 11 durch Bohrungen 12 der Gitterplatte. Unterhalb der Gitterplatte sind sie mit einer Mutter 13 und einer Unterlegscheibe 14 festgespannt.

Der rotationssymmetrische Teil oberhalb der Gitterplatte 2 besitzt einen ersten Absatz 15 mit rechtwinkligem Querschnitt. Dadurch wird eine Aufstandsfläche 16 für die Brennelemente gebildet, die gleichzeitig mit der vertikalen Fläche 17 des darüber liegenden Dorns 18 seitlich zentriert werden. Der Dorn 18 besitzt eine konische Einlaufspitze 19.

An dem der Gitterplatte 2 unmittelbar benachbarten Teil der Zentrierbolzen 10 ist ein zweiter Absatz 21 vorgesehen, der im Querschnitt ebenfalls einen rechten Winkel bildet. Auf der dadurch entstehenden horizontalen Fläche 22 sitzen quadratische Brennelement-Führungsschächte 23 aus Borstahl. Der darüberliegende zylindrische Bereich 24 sorgt für die seitliche Zentrierung, wie dies auch bei dem vorgenannten Stand der Technik der Fall ist.

Trotz der zwei Absätze 15 und 21 sind die Zentrierbolzen 10 einfache Drehkörper, die in automatischen Werkzeugmaschinen billig hergestellt werden können. Sie haben eine gesamte Länge von ca. 170 mm. Dabei ist der Gewindezapfen 11 um 15 mm länger als die Dicke der Gitterplatte 2, die ca. 30-40 mm beträgt. Der zylindrische Teil 25 hat den größten Durchmesser von ca. 60 mm und ist etwa ebenso hoch wie die Dicke der Gitterplatte 2. Der daran anschließende zylindrische Teil 24 mit einem Durchmesser von ca. 40 mm ist etwa doppelt so hoch wie der Teil 25. Die Höhe des zylindrischen Teils des Dornes 18 beträgt ca. 40 mm bei einem Durchmesser von ca. 22 mm.

Durch die Zusammenfassung der Aufstandsflächen mit den Zentrierflächen ergibt sich eine wesentliche Verbesserung der Führung. Gleichzeitig können Bearbeitungsflächen der Gitterplatte wesentlich verkleinert werden. Unter Umständen ist überhaupt keine Bearbeitung der Oberseite der Gitterplatte mehr erforderlich. Die damit erreichte Einsparung der Herstellungskosten beträgt 10 % oder mehr.

**Patentanspruch**

Lagergestell (1) für langgestreckte Brennelemente von Kernreaktoren mit einer unteren Gitterplatte (2), an der Aufstands- und Zentrierungsflächen zur Festlegung der Brennelemente in bestimmten Brennelementpositionen vorgesehen sind, wobei an jeder Brennelementposition mindestens zwei rotationssymetrische Zentrierbolzen (10) vorgesehen sind, die einen durch die Gitterplatte (2) greifenden Gewindezapfen (11) zur Schraubbefestigung aufweisen und zwei oberhalb der Gitterplatte (2) gelegene Absätze (15, 21) mit im Aufriß rechtwinkligem Querschnitt besitzen, von denen der erste Absatz (15) mit seiner horizontalen Fläche die Aufstandsfläche (16) für ein Brennelement bildet, während seine vertikale Fläche (17) zur seitlichen Zentrierung des Brennelements dient und von denen die horizontale Fläche (22) des zweiten Absatzes (21) einen das Brennelement umschließenden Führungsschacht (23) abstützt und durch seine vertikale Fläche (24) zentriert.

**Claim**

A storage rack (1) for oblong fuel elements of nuclear reactors with a lower grid plate (2), on which are arranged installation and centring surfaces for fixing the fuel element in specific fuel element positions, where at least two rotationally symmetric centring bolts (10) are arranged in each fuel element position, which bolts have a threaded journal (11), which grips through the grid plate (2) and serves for the screw fastening, and two shoulders (15, 21) which are positioned above the grid plate (2) and have a rectangular cross-section in the sectional elevation and the first of which shoulders (15) forms the installation surface (16) for a fuel element by means of its horizontal surface, whereas its vertical surface (17) serves for the lateral centring of the fuel element and the horizontal surface (22) of the second shoulder (21) supports a guide shaft (23) which surrounds the fuel element, and its vertical surface (24) centres said shaft.

**Revendication**

Ratelier de stockage (1) d'éléments combustibles oblongs de réacteurs nucléaires, comprenant une plaque inférieure formant grille (2), sur laquelle sont prévues des surfaces d'assise et de centrage destinées à fixer les éléments combustibles en des emplacements déterminés, à chaque emplacement d'élément combustible, il est prévu au moins deux boulons de centrage (10), de révolution, présentant, pour une fixation par vissage, un tourillon (11) fileté traversant la plaque formant grille (2) et ayant, au-dessus de la plaque formant grille (2), des épaulements (15, 21) de section transversale rectangulaire, en vue de dessus, dont le premier (15) forme, par sa surface horizontale, la surface d'assise (16) d'un élément combustible, tandis que sa surface verticale sert à centrer latéralement l'élément combustible et dont le second (21) supporte, par sa surface horizontale (22), une gaine de guidage (23) entourant l'élément combustible et le centre par sa surface verticale (24).